# EUROPÄISCHE PATENTANMELDUNG

(11) **EP 2 664 817 A2**
(43) Veröffentlichungstag der Anmeldung: **20.11.2013**
(21) Anmeldenummer: 13167628.0
(22) Anmeldetag: 14.05.2013
(51) Int. Cl.: F16F 3/10

(54) **Federelement**

(30) Priorität: 14.05.2012 DE 202012101767 U
(71) Anmelder: Diemer & Dr. Jaspert GbR, 85630 Grasbrunn (DE)
(72) Erfinder: Jaspert, Bodo F., 85630 Grasbrunn (DE); Diemer, Gregor, 85456 Wartenberg (DE)
(74) Vertreter: Manitz, Finsterwald & Partner GbR

(57) **Zusammenfassung**

Federelement mit einem Basisabschnitt (1), einem oberen Stützabschnitt (2) und einem zwischen Basisabschnitt (1) und oberem Stützabschnitt (2) angeordneten Federkörper (3), welcher zwei Abschnitte (6) umfasst, die sich beim Einfedern des Federelements voneinander entfernen, wobei zur Verbesserung der Federeigenschaften zwischen den beiden Abschnitten (6) ein zusätzlicher elastischer Körper (7), insbesondere aus hochelastischen Material, eingesetzt ist, welcher mit den beiden Abschnitten (6) verbunden ist.

## Beschreibung

Die vorliegende Erfindung betrifft ein Federelement mit einem Basisabschnitt, einem oberen Stützabschnitt und einem zwischen Basisabschnitt und oberem Stützabschnitt angeordneten Federkörper, welcher zwei Abschnitte umfasst, die sich beim Einfedern des Federelements voneinander entfernen.

Derartige Federelemente können als Federkern für eine Federkernmatratze oder als Einzelstützelemente anstelle von Federleisten einer Untermatratze mit einer Vielzahl derartiger, über die Stützfläche der Untermatratze verteilt angeordneter Einzelstützelemente verwendet werden.

Der Erfindung liegt die Aufgabe zugrunde, derartige Federelemente zu verbessern, insbesondere die Federkernlinie und die Dämpfungseigenschaften.

Diese Aufgabe wird dadurch gelöst, dass zwischen den beiden Abschnitten ein zusätzlicher elastischer Körper, insbesondere aus hochelastischem Material, eingesetzt ist, welcher mit den beiden Abschnitten verbunden ist.

Der elastische Körper aus insbesondere hochelastischem Material führt zu einer zusätzlichen Elastizität des Federelements, also zu einer Verbesserung der Federkernlinie. Durch das Einsetzen des Körpers zwischen zwei sich voneinander entfernenden Abschnitten des Federkörpers wird der zusätzliche Körper beim Einfedern elastisch auseinandergezogen. Dadurch ergibt sich eine zusätzliche Rückstellkraft.

Besonders bevorzugt ist es, wenn drei oder mehr derartige Abschnitte vorhanden sind und der Körper mit drei oder mehr derartigen Abschnitten verbunden ist. Dadurch ergibt sich ein zweidimensionales Auseinanderziehen des zusätzlichen elastischen Körpers mit entsprechend erhöhter Rückstellkraft. Besonders vorteilhaft ist dabei eine gleichmäßige Verteilung der Verbindungsabschnitte um die Einfederachse herum. Dadurch ergibt sich ein gleichmäßiges Federverhalten.

Durch eine Einspannung des Körpers zwischen den Verbindungsabschnitten kann eine gewünschte Vorspannung eingestellt werden.

Der zusätzliche Körper besteht bevorzugt aus einem gelartigen Material, insbesondere einem Elastomer, bspw. thermoplastisches Elastomer, Silikonkautschuk, Gummi oder dergleichen. Damit können besonders vorteilhafte Eigenschaften erreicht werden.

Der zusätzliche elastische Körper weist bevorzugt eine Shore-A-Härte von weniger als 20, insbesondere weniger als 10 auf. Dies hat sich als vorteilhaft gezeigt.

Für die Herstellung des Federelements ist es vorteilhaft, wenn der zusätzliche Körper durch Einclipsen mit den Verbindungsabschnitten des Federkörpers verbunden ist. Hierzu können Verbindungselemente im zusätzlichen elastischen Körper vorgesehen sein, die insbesondere zum lösbaren Verbinden mit den Abschnitten des Federkörpers ausgebildet sind. Besonders bevorzugt ist es, wenn die Verbindungselemente in den zusätzlichen elastischen Körper eingeformt sind. Dies ist günstig in der Herstellung und führt zu einer guten Haltbarkeit.

Ebenfalls bevorzugt bestehen das Federelement und/oder der zusätzliche elastische Körper und/oder die Verbindungselemente aus Kunststoff. Dies ist ebenfalls kostengünstig und außerdem gewichtssparend. Zudem wird die Verwendung von Metallen vermieden.

Der zusätzliche elastische Körper ist bevorzugt flächig bzw. als Scheibe ausgebildet und weist insbesondere eine zentrale Aussparung auf. Die flächige Ausgestaltung hat einerseits den Vorteil, dass eine hohe Elastizität bei geringer Bauhöhe erreicht werden kann, und zum anderen, dass der Körper vorteilhaft als Dämpfer eingesetzt werden kann.

Hierfür ist der zusätzliche elastische Körper bevorzugt zwischen dem oberen Stützabschnitt und dem Basisabschnitt und/oder zwischen zwei in Einfederrichtung übereinanderliegenden Abschnitten des Federkörpers und/oder zwischen einer mit dem oberen Stützabschnitt verbundenen Deckplatte und dem Basisabschnitt angeordnet und überlappt bevorzugt mit diesen zumindest bei Einfederung in Einfederrichtung betrachtet. Beispielsweise kann der zusätzliche elastische Körper beim Einfedern so auseinandergezogen werden, dass er mit den genannten Elementen überlappt. Bei einem vollständigen Einfedern des Federelements kann so ein hartes Aufschlagen vermieden werden.

Ebenfalls bevorzugt weist der Federkörper zwischen Basisabschnitt und oberem Stützabschnitt des Federelements angeordnete Federarme auf und hat keine Abschnitte, die sich in Einfederrichtung betrachtet gegenseitig überlappen. Das Federelement hat dadurch bei vollständigem Einfedern eine geringe verbleibende Bauhöhe und einen insgesamt hohen Federweg. Ein Ausführungsbeispiel der Erfindung ist in den Zeichnungen dargestellt und wird nachfolgend beschrieben. Es zeigen, jeweils in schematischer Darstellung,
- Fig. 1: eine perspektivische Ansicht des erfindungsgemäßen Federelements,
- Fig. 2: eine Seitenansicht des Federelements von Fig. 1,
- Fig. 3: eine Draufsicht auf das Federelement von Fig. 1,
- Fig. 4: eine Explosionsdarstellung des Federelements mit gelöstem zusätzlichen elastischen Körper,
- Fig. 5: eine perspektivische Ansicht des zusätzlichen elastischen Körpers mit teilweise weggenommenen Abschnitten, und
- Fig. 6: eine Explosionsdarstellung der Teile des zusätzlichen elastischen Körpers.

Das dargestellte Federelement umfasst einen Basisabschnitt 1, einen oberen Stützabschnitt 2 mit vier Stützabschnittsteilen 2¹ bis 2⁴, die bevorzugt zum Verbinden mit einer hier nicht dargestellten Deckplatte ausgebildet sind, sowie einen zwischen Basisabschnitt 1 und oberem Stützabschnitt 2 angeordneten Federkörper 3. Der Federkörper 3 wird durch Federarme 4 und 5 gebildet. Die Federarme 5 verbinden jeweils zwei benachbarte obere Stützabschnittsteile 2¹ bis 2⁴ und sind in Richtung auf den Basisabschnitt 1 nach unten geschwungen ausgebildet. Die Federarme 4 sind mit jeweils einem Ende mit dem Basisabschnitt 1 verbunden und erstrecken sich von diesem radial nach außen und bogenförmig nach oben in Richtung auf die geschwungenen Federarme 5, mit denen sie mit ihrem anderen Ende verbunden sind, und zwar jeweils im mittleren, tiefsten Bereich des jeweiligen Federarms 5.

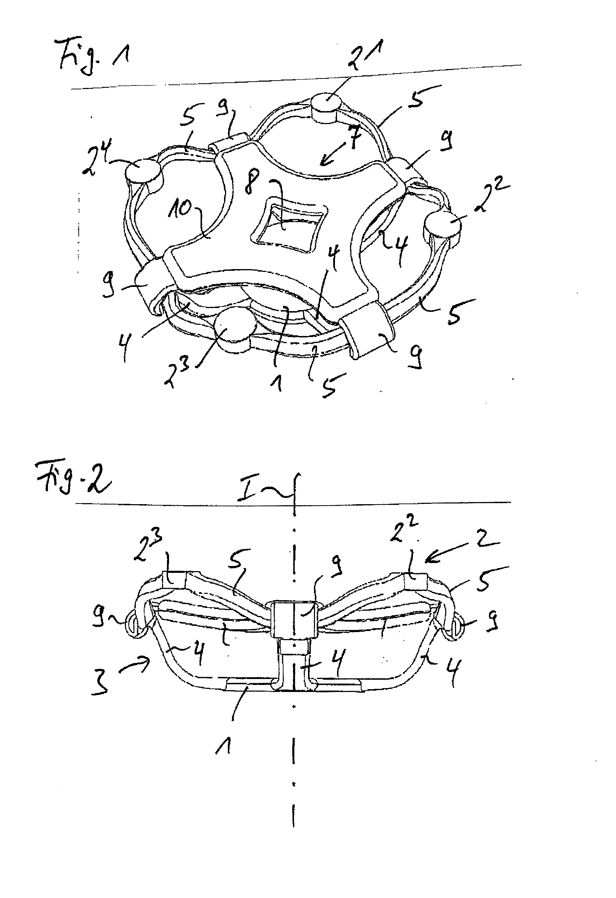

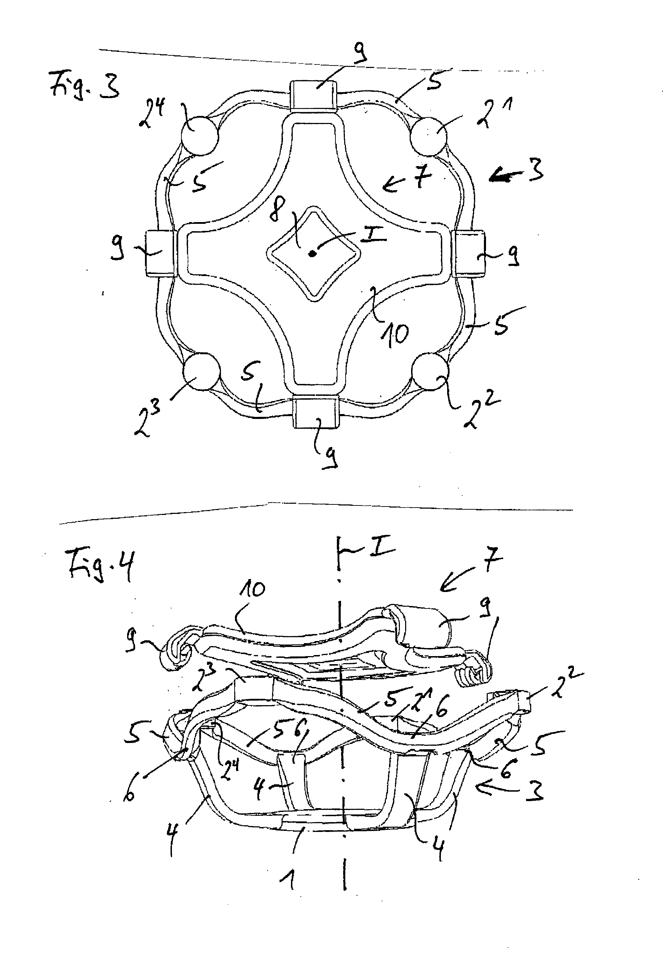

Beim Einfedern in Richtung der Federachse I verformen sich die Federarme 4 und 5. Dabei bewegen sich die Verbindungsabschnitte 6 zwischen den Federarmen 5 und den Federarmen 4 in Bezug auf die Federachse I radial nach außen, entfernen sich also voneinander. Zwischen diese Verbindungsabschnitte 6 ist, wie man insbesondere Fig. 1 bis 3 entnehmen kann, ein zusätzlicher, hochelastischer Körper 7 eingesetzt. Der Körper 7 ist plattenartig ausgebildet und weist eine zentrale Aussparung 8 auf. Er ist mit Verbindungselementen 9 versehen, die lösbar mit den Verbindungsabschnitten 6 des Federkörpers 3 verbunden, insbesondere auf diese aufgeclipst sind.

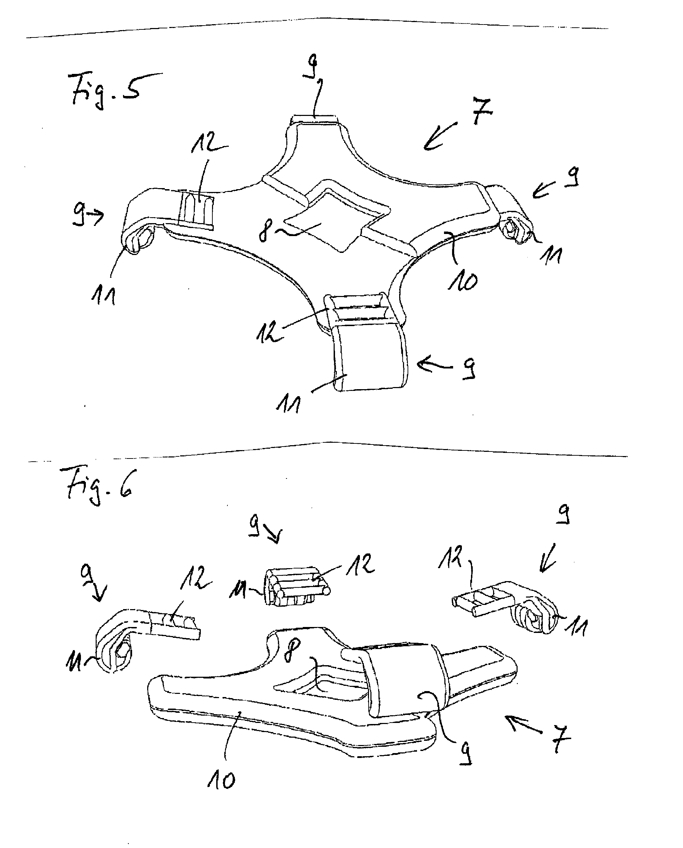

Wie man in den Fig. 5 und 6 sieht, handelt es sich bei den Verbindungselementen 9 um separate Elemente, welche in das Grundelement 10 des zusätzlichen elastischen Körpers 7 eingeformt sind. Die Verbindungselemente 9 weisen einen Clipsabschnitt 11 und einen Formschlussabschnitt 12 auf, der leiterartig ausgebildet ist. Dadurch kann Material des Grundkörpers 10 zwischen die Leitersprossen dringen und eine feste Formschlussverbindung bewirken. Während der Grundkörper 10 aus dem hochelastischen, insbesondere gelartigen Material besteht, sind die Verbindungselemente 9 bevorzugt aus Hartkunststoff oder dergleichen gebildet.

Das Federelement besteht insgesamt bevorzugt aus Kunststoff, wobei insbesondere die Federarme 4, 5 aus federelastischem Material bestehen, und der zusätzliche elastische Körper 7 aus hochelastischem Kunststoff. Bei dem Material der Federarme kann es sich insbesondere um ein Elastomer handeln, beispielsweise ein thermoplastisches Elastomer. Als Material für den zusätzlichen elastischen Körper 7 kommt ebenfalls ein Elastomer, bspw. thermoplastisches Elastomer, Silikonkautschuk, Gummi oder dergleichen in Betracht. Die Shore-A-Härte des zusätzlichen elastischen Körpers 7 beträgt weniger als 20, bevorzugt weniger als 10, bspw. ca. 5.

Wie man den Zeichnungen entnehmen kann, ist der zusätzliche elastische Körper 7 in Federrichtung I betrachtet zwischen den oberen Stützabschnittteilen 2¹ bis 2⁴ angeordnet. Er befindet sich oberhalb des Basisabschnitts 1 und unterhalb einer mit den Stützabschnittteilen 2¹ bis 2⁴ verbundenen Deckplatte und überlappt in Einfederrichtung I betrachtet mit diesen Elementen. Beim vollständigen Einfedern des Federelements wird der zusätzliche elastische Körper 7 daher zwischen Deckplatte und Basisabschnitt 1 eingequetscht und dient dadurch als Dämpfer. Der zusätzliche elastische Körper 7 kann im Übrigen zwischen den Verbindungsabschnitten 6 eingespannt sein. Dadurch kann eine Vorspannung eingestellt werden.

Schließlich kann man anhand der Zeichnungen erkennen, dass die Federarme 4, 5 des Federkörpers 3 derart ausgebildet und angeordnet sind, dass sie sich in Einfederrichtung I betrachtet nicht gegenseitig überlappen und auch keine Abschnitte aufweisen, die sich überlappen. Die Federarme 4, 5 können sich dadurch beim vollständigen Einfedern völlig flach legen, sodass die verbleibende Bauhöhe des Federelements gering ist. Der Federweg des Federelements ist entsprechend erhöht.

**Bezugszeichenliste**

| | |
|---|---|
| 1 | Basisabschnitt |
| 2 | oberer Stützabschnitt |
| 2¹ bis 2⁴ | obere Stützabschnittteile |
| 3 | Federkörper |
| 4 | Federarm |
| 5 | Federarm |
| 6 | Verbindungsabschnitt |
| 7 | zusätzlicher elastischer Körper |
| 8 | Aussparung |
| 9 | Verbindungselement |
| 10 | Grundkörper |
| 11 | Clipsabschnitt |
| 12 | Formschlussabschnitt |
| | |
| I | Einfederrichtung |

## Patentansprüche

1. Federelement mit einem Basisabschnitt (1), einem oberen Stützabschnitt (2) und einem zwischen Basisabschnitt (1) und oberem Stützabschnitt (2) angeordneten Federkörper (3), welcher zwei Abschnitte (6) umfasst, die sich beim Einfedern des Federelements voneinander entfernen,
**dadurch gekennzeichnet, dass** zwischen den beiden Abschnitten (6) ein zusätzlicher elastischer Körper (7), insbesondere aus hochelastischen Material, eingesetzt ist, welcher mit den beiden Abschnitten (6) verbunden ist.

2. Federelement nach Anspruch 1,
**dadurch gekennzeichnet, dass** drei oder mehr derartige Abschnitte (6) vorhanden sind und dass der zusätzliche elastische Körper (7) mit drei oder mehr derartigen Abschnitten (6) verbunden ist, insbesondere gleichmäßig um die Einfederachse (I) herum verteilt.

3. Federelement nach Anspruch 1 oder 2,
**dadurch gekennzeichnet, dass** der zusätzliche elastische Körper (7) zwischen den Abschnitten (6) eingespannt ist.

4. Federelement nach einem der vorhergehenden Ansprüche,
**dadurch gekennzeichnet, dass** der zusätzliche elastische Körper (7) aus gelartigem Material besteht, insbesondere aus einem Elastomer, insbesondere thermoplastisches Elastomer, Silikonkautschuk, Gummi oder dergleichen.

5. Federelement nach einem der vorhergehenden Ansprüche,
**dadurch gekennzeichnet, dass** der zusätzliche elastische Körper (7) eine Shore-A-Härte von weniger als 20, insbesondere weniger als 10 aufweist.

6. Federelement nach einem der vorhergehenden Ansprüche,
**dadurch gekennzeichnet, dass** der zusätzliche elastische Körper (7) durch Einclipsen mit den Abschnitten (6) verbunden ist.

7. Federelement nach einem der vorhergehenden Ansprüche,
**dadurch gekennzeichnet, dass** in dem zusätzlichen elastischen Körper (7) Verbindungselemente (9) zum insbesondere lösbaren Verbinden des zusätzlichen elastischen Körpers (7) mit den Abschnitten (6) vorgesehen, insbesondere eingeformt sind.

8. Federelement nach einem der vorhergehenden Ansprüche,
**dadurch gekennzeichnet, dass** das Federelement und/oder der zusätzliche elastische Körper (7) und/oder die Verbindungselemente (9) aus Kunststoff bestehen.

9. Federelement nach einem der vorhergehenden Ansprüche,
**dadurch gekennzeichnet, dass** der zusätzliche elastische Körper (7) flächig bzw. als Scheibe ausgebildet ist, insbesondere mit einer zentralen Aussparung (8).

10. Federelement nach einem der vorhergehenden Ansprüche,
**dadurch gekennzeichnet, dass** der zusätzliche elastische Körper (7) zwischen der oberen Stützfläche (2) und dem Basisabschnitt (1) und/oder zwischen zwei in Einfederrichtung (I) übereinanderliegenden Abschnitten des Federkörpers (3) und/oder zwischen dem Basisabschnitt (1) und einer mit der oberen Stützfläche (2) verbundenen Deckplatte angeordnet ist.

11. Federelement nach Anspruch 10,
**dadurch gekennzeichnet, dass** sich der zusätzliche elastische Körper (7) zumindest bei Einfederung in Einfederrichtung (I) betrachtet mit der oberen Stützfläche (2) und/oder einer mit der oberen Stützfläche (2) verbundenen Deckplatte und dem Basisabschnitt (1) und/oder einem Abschnitt des Federkörpers (3) oder mit zwei übereinanderliegenden Abschnitten des Federkörpers (3) oder mit einem Abschnitt des Federkörpers (3) und dem Basisabschnitt (1) mindestens teilweise überlappt.

12. Federelement nach einem der vorhergehenden Ansprüche,
**dadurch gekennzeichnet, dass** der Federkörper (3) zwischen Basisabschnitt (1) und oberem Stützabschnitt (2) des Federelements angeordnete Federarme (4, 5) aufweist und keine Abschnitte hat, die sich in Einfederrichtung (I) betrachtet gegenseitig überlappen.
